# EUROPEAN PATENT SPECIFICATION

(11) **EP 2 364 888 B1**
(45) Date of publication and mention of the grant of the patent: **29.02.2012**
(21) Application number: 10155821.1
(22) Date of filing: 08.03.2010
(51) Int. Cl.: B60R 22/03

(54) **Seatbelt device**
Sicherheitsgurtvorrichtung
Dispositif de ceinture de sécurité

(43) Date of publication of application: 14.09.2011
(73) Proprietor: Honda Motor Co., Ltd., Tokyo 107-8556 (JP); Technische Universität Berlin, 10623 Berlin (DE)
(72) Inventor: Kerkeling, Christoph, 63073 Offenbach/Am Main (DE); Eisenach, Alexander, 13355 Berlin (DE)
(74) Representative: Herzog, Markus

(56) References cited:
- EP-A1- 1 942 036
- EP-A2- 2 000 371
- DE-A1-102008 026 410
- US-B1- 6 293 588

## Description

### BACKGROUND OF THE INVENTION

### Field of the Invention

The present invention relates to a seatbelt device.

### Description of the Related Art

Among seatbelt devices, there has been known a four-point seatbelt device including two shoulder belts and two lap belts (refer to JP-A-H07-291092).

The four-point seatbelt device has an advantage in that an occupant may be retrained with a good left and right balance compared with a three-point seatbelt device, but there is a problem in that the getting in/out property is poor due to the obstruction of the two shoulder belts located on the side of the shoulders when the seatbelt device is fastened or unfastened.

US-B1- 6 293 588 discloses a four-point seatbelt device in that shoulder belts are moved either apart or together in order to allow easier getting in or out

### SUMMARY OF THE INVENTION

An object of the present invention is to provide a seatbelt device capable of further improving a getting in/out property.

In order to achieve the above-described object, according to a first aspect of the invention, there is provided a seatbelt device including: a buckle (e.g., a buckle 44 in an embodiment) to which a first shoulder belt (e.g., a first shoulder belt S1 in an embodiment) and a first lap belt (e.g., a first lap belt L1 in an embodiment) are fixed; a tongue (e.g., a tongue 45 in an embodiment) to which a second shoulder belt (e.g., a second shoulder belt S2 in an embodiment) and a second lap belt (e.g., a second lap belt L2 in an embodiment) are fixed; a driving mechanism (e.g., a driving mechanism 31 in an embodiment) driving the first lap belt and the second lap belt in a width direction of a vehicle body; a first ring (e.g., a first ring 16 in an embodiment) through which the first shoulder belt is inserted; and a second ring (e.g., a second ring 26 in an embodiment) through which the second shoulder belt is inserted, wherein the driving mechanism drives the first ring and the second ring so as to be close to or away from each other when the first lap belt and the second lap belt are driven in the width direction of the vehicle body.

According to a second aspect of the invention, the driving mechanism includes a motor (e.g., a motor M in an embodiment).

According to a third aspect of the invention, the driving mechanism includes a retractor (e.g., a retractor 43 in an embodiment) on which the first shoulder belt or the second shoulder belt are wound, and the retractor is provided in a seatback (e.g., a seatback 2 in an embodiment).

In the first aspect of the invention, since it is possible to move the first ring and the second ring so as to be close to each other when the occupant fastens the seatbelt device, the occupant is not obstructed by the first shoulder belt and the second shoulder belt when the occupant gets in or out from the vehicle, and hence it is possible to improve a getting in/out property.

In the second aspect of the invention, it is possible to reduce an operation force, required when the occupant attaches the tongue to the buckle, by using the motor.

In the third aspect of the invention, since the webbing is extracted from and wound around the retractor in rear of the seatback, it is possible to reliably restrain the occupant. Also, since it is possible to form the seatbelt device by the seat and one unit compared with the case in which the retractor is provided in a pillar, it is possible to reduce the number of constituents and the number of assembling processes.

### BRIEF DESCRIPTION OF THE DRAWINGS

FIG. 1 is a front view of an embodiment of the invention.
FIG. 2 is a side view of FIG. 1.
FIG. 3 is an enlarged view of a main part of FIG. 1.
FIG. 4 is a side view corresponding to FIG. 2 according to another embodiment.
FIG. 5 is a front view corresponding to FIG. 1 and illustrating another embodiment.

### DETAILED DESCRIPTION OF THE INVENTION

Next, an embodiment of the invention will be described with reference to the accompanying drawings.

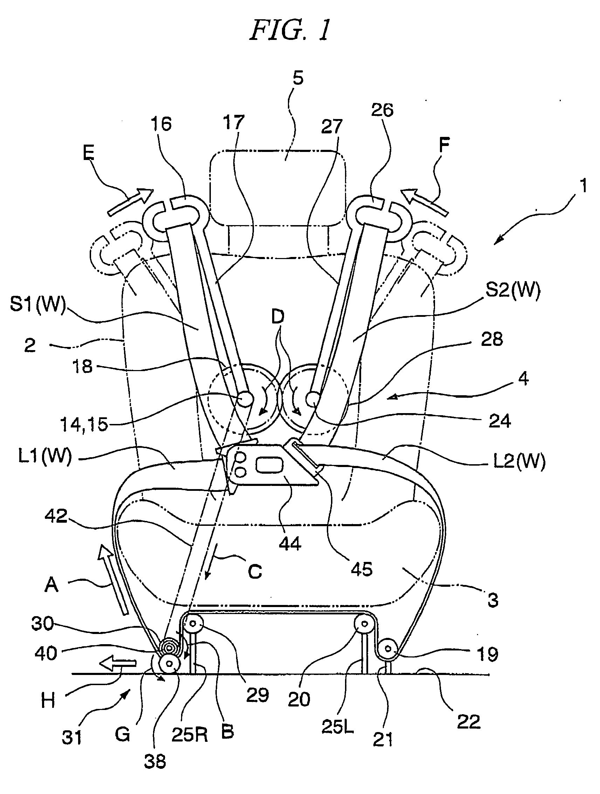

As shown in FIG. 1, a vehicle seat 1 is a seat disposed on a front row in a vehicle interior so as to face forward, and includes a seatback 2 and a seat cushion 3. The seat 1 is provided with a four-point seatbelt device 4.

Inside the seatback 2, a pair of support shafts 14 and 24, arranged along the left and right direction, is rotatably supported at the center portion of the seat 1 as viewed in the vertical direction thereof and at the center portion of the seat 1 as viewed in the width direction of the vehicle. A first arm 17 including a C-shaped first ring 16 disposed at the upper end thereof is tiltably supported by the right first support shaft 14, and a second arm 27 including a C-shaped second ring 26 disposed at the upper end thereof is tiltably supported by the left second support shaft 24. The first support shaft 14 and the second support shaft 24 respectively include a first driving gear 18 and a second driving gear 28 rotating together with the first support shaft 14 and the second support shaft 24, where the first driving gear 18 and the second driving gear 28 mesh with each other.

The lengths of the first arm 17 and the second arm 27 are determined so that the first ring 16 of the first arm 17 and the second ring 26 of the second arm 27 are located on both sides of a headrest 5 so as to correspond to the height of the shoulder of the tallest occupant, and the first ring 16 and the second ring 26 protrude from the upper end of the seatback 2. In addition, the upper ends of the first arm 17 and the second arm 27 are respectively connected to the first ring 16 and the second ring 26 at positions closer to the center portion of the seat 1 as viewed in the width direction of the vehicle than the centers of the first ring 16 and the second ring 26, and thus the first arm 17 and the second arm 27 are disposed closer to the center portion of the seat 1 as viewed in the width direction of the vehicle than first and second shoulder belts S1 and S2 which are to be described later.

Below the seat cushion 3, a left lower pulley 19 is supported in a rotatable manner at a left outside position and on a floor panel 22 via a bracket 21, and a left upper pulley 20 is supported in a rotatable manner via a bracket 25L at a position closer to the center portion of the seat 1 as viewed in the width direction of the vehicle than the left lower pulley 19.

Moreover, below the seat cushion 3, a right upper pulley 29 is supported in a rotatable manner at a right inside position and on the floor panel 22 via a bracket 25R, and a right lower pulley 30 is supported, via a driving mechanism 31, at a position farther from the center portion of the seat 1 as viewed in the width direction of the vehicle than the right upper pulley 29 in a rotatable manner and in a manner movable in the width direction of the vehicle.

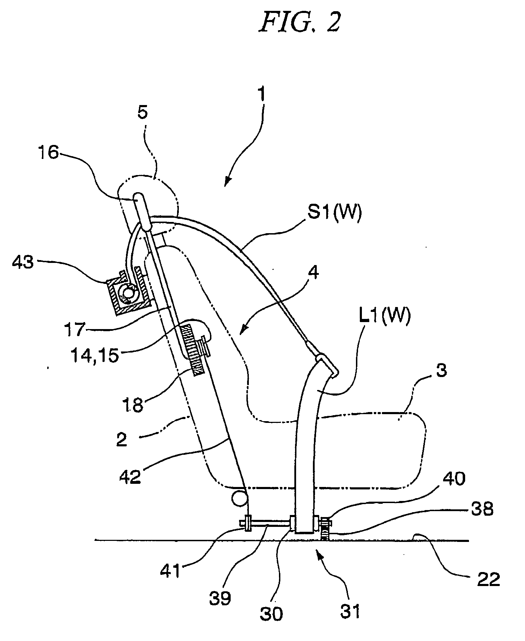

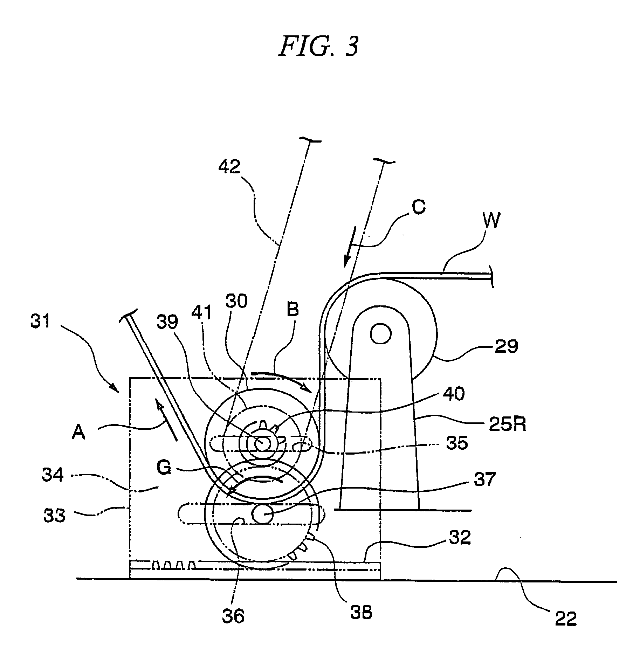

As shown in FIGS. 2 and 3, the driving mechanism 31 includes a rack 32 which is provided on the floor panel 22, a casing 33, upper and lower guide grooves 35 and 36 which are provided in a wall 34 of the casing 33 in the width direction of the vehicle, a driving gear 38 which meshes with the rack 32 so that a shaft 37 is movably guided by the lower guide groove 36, a pinion 40 which is coaxially provided with a shaft 39 of a right lower pulley 30 and meshes with the driving gear 38, and an arm driving gear 41 (refer to FIG. 2) which is provided in the shaft 39 and is disposed in rear of the right lower pulley 30.

Here, although the guide groove 35, the guide groove 36, and the rack 32 are linearly depicted for convenience of drawing, the guide groove 35 is formed in an arc shape passing the shaft 39 about the support shaft 14. In the same manner, the guide groove 36 is formed in an arc shape so that the driving gear 38 meshes with the pinion 40 in accordance with the movement of the pinion 40, and the rack 32 is also formed in an arc shape so as to correspond to the guide groove 36.

The first support shaft 14 of the first driving gear 18 is provided with a gear 15, and a chain 42 is wound around the gear 15 and the arm driving gear 41.

In rear of the first ring 16, a retractor 43 is fixed to a position below the first ring 16 and behind the seatback 2. A webbing W may be wound around the retractor 43 downward from the first ring 16.

The extraction end of the webbing W passing through the first ring 16 is provided with a buckle 44, and a section from the first ring 16 to the buckle 44 forms a right first shoulder belt S1. The end of a right first lap belt L1 is fixed to the buckle 44. The first lap belt L1 is wound around the right lower pulley 30 and the right upper pulley 29, is wound around the left upper pulley 20 and the left lower pulley 19 on the left side of the seat cushion 3, extends to the upper position of the seat cushion 3, and then arrives at a tongue 45 adapted to be inserted into the buckle 44.

A section from the left lower pulley 19 to the tongue 45 forms a left second lap belt L2 of the webbing W, and the webbing W from the tongue 45 to the second ring 26 forms a second shoulder belt S2 which are wound on the left retractor (not shown). Here, the tongue 45 is adapted to be fixed to the webbing W when being inserted into the buckle 44, and is also adapted to be movable while the fixing operation to the webbing W is released if necessary.

Next, an operation of the seatbelt device 4 will be described.

In the state where the occupant gets off the vehicle, the first ring 16 and the second ring 26 move outward so as to be away from each other. Accordingly, the first shoulder belt S1 and the first lap belt L1 are suspended downward, and the second shoulder belt S2 and the second lap belt L2 are suspended downward, so that the buckle 44 and the tongue 45 are located at positions away from the center portion of the seat 1.

In this state, the occupant sitting on the seat 1 pulls the tongue 45 rightward so as to extract the webbing W from the left retractor, and inserts the tongue 45 into the buckle 44 located in the right. Then, when the occupant pulls leftward the buckle 44 having the tongue 45 inserted thereinto toward the center portion of the seat 1 as viewed in the width direction of the vehicle, the first lap belt L1 is pulled leftward, and hence the webbing W of the lap belt L1 on the side of the seatback 2 is pulled upward (as indicated by the arrow A in FIG. 1). Then, since the right lower pulley 30 rotates clockwise (as indicated by the arrow B in FIG. 1), the pinion 40 rotates clockwise so that the shaft 39 (shown in FIGS. 2-4) rotates and the chain 42 rotates clockwise (as indicated by the arrow C in FIG. 1).

Accordingly, as shown in FIG. 1, the gear 15 rotates clockwise, so that the first driving gear 18 rotates clockwise and the second driving gear 28 rotates counterclockwise (as indicated by the arrows D in FIG. 1). Accordingly, the first arm 17 and the second arm 27 are tilted inward about the first support shaft 14 and the second support shaft 24 of the first driving gear 18 and the second driving gear 28 (as indicated by the arrows E and F in FIG. 1). Therefore, the first ring 16 and the second ring 26 move so as to be close to each other.

Here, when the right lower pulley 30 rotates in the direction indicated by the arrow B and the driving gear 38 rotates in the direction indicated by the arrow G by the pinion 40, the driving gear 38 moves on the rack 32 outward in the width direction of the vehicle (the direction indicated by the arrow H). Accordingly, since the right lower pulley 30 is displaced outward in the width direction of the vehicle together with the driving gear 38, a tension is applied in a direction in which the first lap belt L1 is wound so as to give a tension to the webbing W.

According to the above-described embodiment, when the seated occupant pulls the tongue 45 rightward so as to be inserted into the buckle 44 and pulls the buckle 44 having the tongue 45 attached thereto leftward, the first lap belt L 1 is pulled inward. In order to tilt the first arm 17 and the second arm 27 inward by using the driving mechanism 31, the first ring 16 and the second ring 26 move so as to be close to each other.

Accordingly, the first shoulder belt S1 and the second shoulder belt S2 used for restraining the shoulder portions of the seated occupant are positioned in the horizontal direction by the movement of the first ring 16 and the second ring 26 approaching to each other, and extend downward at the shoulder portions of the occupant. Accordingly, it is possible to reliably restrain the shoulder portions of the occupant without the obstruction at the periphery of the neck of the occupant as in the three-point seatbelt. In addition, since the first ring 16 and the second ring 26 further move away from each other outward until the occupant sits on the seat and performs the attachment operation of the seatbelt device 4, it is possible to improve the getting in/out property without the obstruction of the first ring 16 and the second ring 26 when the occupant gets in or out the vehicle.

In addition, when the occupant detaches the tongue 45 from the buckle 44 so as to get out the vehicle, the first shoulder belt S1 is pulled in a direction in which the first shoulder belt S1 is wound by the retractor 43. Because the upper ends of the first arm 17 and the second arm 27 are respectively connected to the first ring 16 and the second ring 26 at positions closer to the center portion of the seat 1 as viewed in the width direction of the vehicle than the centers of the first ring 16 and the second ring 26, and the first arm 17 and the second arm 27 are disposed closer to the center portion of the seat 1 as viewed in the width direction of the vehicle than the first and second shoulder belts S1 and S2, downward force is applied to the first ring 16 of the first arm 17 and the second ring 26 of the second arm 27 when the webbings W are wound around or extracted from the right retractor 43 and the left retractor.

Accordingly, since the first arm 17 rotates in a direction opposite to the direction indicated by the arrow E in FIG. 1 and the second arm 27 rotates in a direction opposite to the direction indicated by the arrow F, both are tilted outward in the width direction of the vehicle so that the first ring 16 and the second ring 26 move so as to be away from each other. Accordingly, when the occupant gets out from the vehicle, the occupant is not obstructed by the first shoulder belt S1 and the second shoulder belt S2.

Then, since the webbing W is extracted from and wound around the retractor 43 in rear of the seatback 2, it is possible to reliably restrain the occupant. Also, since it is possible to form the seatbelt device 4 by the seat 1 and one unit compared with the case in which the retractor is provided in the pillar, it is possible to reduce the number of constituents and the number of assembling processes.

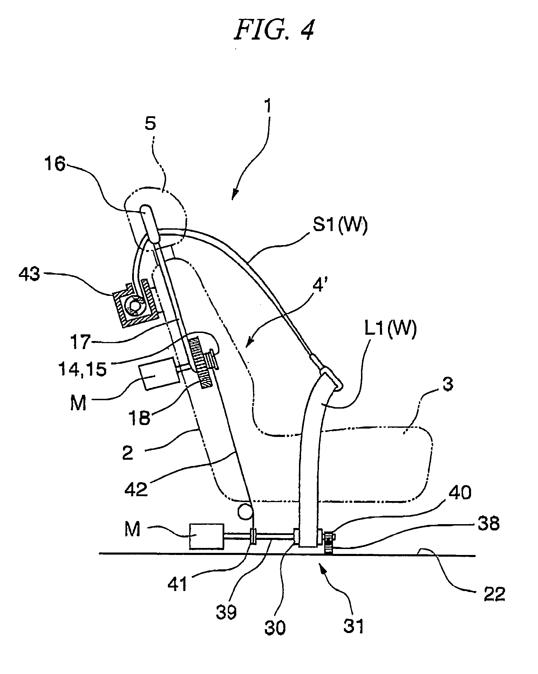

In addition, the invention is not limited to the above-described embodiment. For example, as shown in FIG. 4, a seatbelt device 4' may be configured in such a manner that a motor M is coaxially connected to both or one of the first driving gear 18 and the arm driving gear 41 so that the motor M assists the seatbelt device. With such a configuration, it is possible to reduce an operation force upon performing an operation, in which the occupant attaches the tongue 45 to the buckle 44, by using the assisting force of the motor M. Accordingly, it is possible to control a tension applied to the webbing W when the occupant is restrained. In FIG. 4, the same reference numerals are given to the same constituents as those of FIGS. 1 to 3.

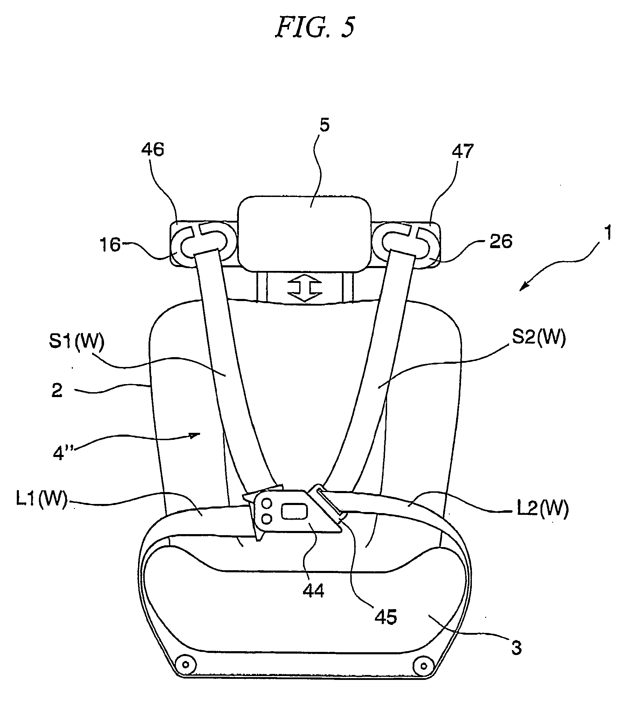

A seatbelt device 4" shown in FIG. 5 is to position the first ring 16 and the second ring 26 in the vertical direction. The seat 1 includes the seatback 2 and the seat cushion 3, and the headrest 5 is provided in the seatback 2 so as to be movable in the vertical direction. A first bracket 46 is integrally formed with the right side portion of the headrest 5, and a second bracket 47 is integrally formed with the left side portion thereof. The first bracket 46 and the second bracket 47 are respectively provided with the first ring 16 and the second ring 26. The first bracket 46 and the second bracket 47 are respectively provided with retractors (not shown).

The extraction end of the webbing W is provided with the buckle 44, and a section thereof from the first ring 16 to the buckle 44 forms the right first shoulder belt S1. The end of the right first lap belt L1 is fixed to the buckle 44, and the first lap belt L1 is continuous to the second lap belt L2 which extends from the left portion of the seat 1 to the tongue 45 through the position below the seat cushion 3. Accordingly, the section of the webbing W from the tongue 45 to the second ring 26 forms the second shoulder belt S2.

In the seatbelt device 4", even when a tall occupant sits on the seat or an occupant shorter than the tall occupant sits on the seat, since the first ring 16 and the second ring 26 are fixed to both sides of the headrest 5 which are controlled so as to correspond to the height, there is a merit in that the first shoulder belt S1 and the second shoulder belt S2 may be located at the appropriate position of the occupant in the vertical direction so as to correspond to the height.

## Claims

1. A seatbelt device comprising:
a buckle (44) to which a first shoulder belt (S1) and a first lap belt (L1) are fixed;
a tongue (45) to which a second shoulder belt (S2) and a second lap belt (L2) are fixed;
a driving mechanism (31) driving the first lap belt (L1) and the second lap belt (L2) in a width direction of a vehicle body;
a first ring (16) through which the first shoulder belt (S1) is inserted; and
a second ring (26) through which the second shoulder belt (S2) is inserted,
wherein the driving mechanism (31) drives the first ring (16) and the second ring (26) so as to be close to or away from each other when the first lap belt (L1) and the second lap belt (L2) are driven in the width direction of the vehicle body.

2. The seatbelt device according to claim 1, wherein the driving mechanism (31) includes a motor (M).

3. The seatbelt device according to claim 1 or 2, wherein the driving mechanism (31) includes a retractor (43) on which the first shoulder belt (S1) and the second shoulder belt (S2) are wound, and the retractor (43) is disposed in a seatback (2).

## Patentansprüche

1. Sicherheitsgurtvorrichtung, umfassend:
ein Schloss (44), an dem ein erster Schultergurt (S1) und ein erster Beckengurt (L1) befestigt sind;
eine Zunge (45), an der ein zweiter Schultergurt (S2) und ein zweiter Beckengurt (L2) befestigt sind;
einen Antriebsmechanismus (31), der den ersten Beckengurt (L1) und den zweiten Beckengurt (L2) in Breitenrichtung eines Fahrzeugkörpers antriebt; und
einen zweiten Ring (16), durch den der erste Schultergurt (S1) eingeführt ist; und
einen zweiten Ring (26), durch den der zweite Schultergurt (S2) eingeführt ist,
worin der Antriebsmechanismus (31) den ersten Ring (16) und den zweiten Ring (26) so antreibt, dass sie einander benachbart oder voneinander entfernt werden, wenn der erste Beckengurt (L1) und der zweite Beckengurt (L2) in der Breitenrichtung des Fahrzeugkörpers angetrieben werden.

2. Sicherheitsgurtvorrichtung nach Anspruch 1, worin der Antriebsmechanismus (31) einen Motor (M) enthält.

3. Sicherheitsgurtvorrichtung nach Anspruch 1 oder 2, worin der Antriebsmechanismus (31) einen Retraktor (43) enthält, auf den der erste Schultergurt (S1) und der zweite Schultergurt (S2) gewickelt werden, und der Retraktor (43) in einer Sitzlehne (2) angeordnet ist.

## Revendications

1. Dispositif de ceinture de sécurité comprenant :
une boucle (44) à laquelle une première sangle d'épaule (S1) et une première sangle ventrale (L1) sont fixées ;
une languette (45) à laquelle une deuxième sangle d'épaule (S2) et une deuxième sangle ventrale (L2) sont fixées ;
un mécanisme d'entraînement (31) entraînant la première sangle ventrale (L1) et la deuxième sangle ventrale (L2) dans le sens de la largeur d'un corps de véhicule ;
un premier anneau (16) à travers lequel la première sangle d'épaule (S1) est insérée ; et
un deuxième anneau (26) à travers lequel la deuxième sangle d'épaule (S2) est insérée,
dans lequel le mécanisme d'entraînement (31) entraîne le premier anneau (16) et le deuxième anneau (26) afin de se rapprocher ou de s'éloigner l'un de l'autre lorsque la première sangle ventrale (L1) et la deuxième sangle ventrale (L2) sont entraînées dans le sens de la largeur du corps de véhicule.

2. Dispositif de ceinture de sécurité selon la revendication 1, dans lequel le mécanisme d'entraînement (31) comprend un moteur (M).

3. Dispositif de ceinture de sécurité selon la revendication 1 ou 2, dans lequel le mécanisme d'entraînement (31) comprend un rétracteur (43) sur lequel la première sangle d'épaule (S1) et la deuxième sangle d'épaule (S2) sont enroulées, et le rétracteur (43) est disposé dans un dossier (2).
